# FASCICULE DE BREVET EUROPEEN

(11) **EP 3 233 539 B1**
(45) Date de publication et mention de la délivrance du brevet: **05.12.2018**
(21) Numéro de dépôt: 15825808.7
(22) Date de dépôt: 13.12.2015
(51) Int. Cl.: B60C 23/04

(54) **PATCH POUR MODULE ELECTRONIQUE DE PNEUMATIQUE**
HALTEVORRICHTUNG ZUM MONTIEREN EINES ELEKTRONISCHEN BAUTEILS AUF EINEM REIFEN
MOUNTING PATCH FOR MOUNTING AN ELECTRONIC ASSEMBLY ON A TIRE

(30) Priorité: 15.12.2014 FR 1402854
(43) Date de publication de la demande: 25.10.2017
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: URBIN-CHOFFRAY, Maxime, 63040 Clermont-Ferrand Cedex 9 (FR)
(74) Mandataire: Roussy, Delphine
(86) Numéro de dépôt international: PCT/IB2015/002328
(87) Numéro de publication internationale: WO 2016/097836

(56) Documents cités:
- EP-A1- 1 384 603
- DE-A1-102008 063 469
- GB-A- 2 392 889
- US-A- 5 500 065
- US-A1- 2002 046 791
- US-A1- 2014 261 944
- US-B1- 6 546 982

## Description

### DOMAINE TECHNIQUE DE L'INVENTION

La présente invention concerne un patch pour module électronique de pneumatique comportant un compartiment logeant un module électronique.

### ETAT DE LA TECHNIQUE ANTERIEURE

De manière générale, deux solutions permettant de gérer des modules électroniques de pneumatique sont connues.

La première solution consiste à intégrer un module électronique au pneumatique en le rendant définitivement fixe. Pour ce faire, le module électronique est mécaniquement et irréversiblement solidaire du pneumatique. Un tel agencement permet d'associer les données obtenues par ledit module à l'identifiant du pneumatique correspondant. Cette-solution empêche cependant le remplacement ou la modification du module électronique. Elle n'est donc pas compatible avec les systèmes électroniques prévus pour être amovibles.

Le document FR2870031 décrit un procédé de surveillance de pneumatique équipant un véhicule terrestre. Ce procédé est mis en oeuvre au moyen d'une unité centrale de contrôle, et de puces électroniques implantées dans les flancs du pneumatique. Les puces d'un même pneumatique portent des codes d'identification identiques ainsi que des codes respectifs représentatifs de leurs implantations sur ce pneumatique.

La seconde solution consiste à prévoir un module électronique rapporté au pneumatique de façon amovible. Cette solution implique d'effectuer un appairage entre l'identifiant du pneumatique et le module électronique. Pour effectuer un tel appairage, on peut prévoir différentes démarches. Par exemple, l'appairage peut être effectué par une opération manuelle d'écriture de l'identifiant par un module communément appelé « RFID » ou par marquage dans la mémoire du module électronique. L'appairage peut aussi être réalisé par l'utilisation de portiques de synchronisation externes entre l'identifiant du pneumatique et le module électronique. L'appairage entre l'identifiant et le module électronique peut aussi être effectué via le véhicule. Enfin, l'appairage peut être réalisé par lecture directe de l'identifiant par le module électronique lui-même.

Les solutions d'appairage manuelles ou utilisant des systèmes externes nécessitent un ré-appairage à chaque changement de module électronique ou de pneumatique. Dès lors, aucune garantie sur le bon appairage ne peut être apportée. De plus, l'appairage via le véhicule nécessite une infrastructure coûteuse et fortement intrusive au niveau du véhicule. Enfin, la solution de lecture directe de l'identifiant par un module électronique requiert une bonne communication entre les éléments concernés.

Le document DE102005023597 décrit un pneumatique de véhicule sur lequel est disposé, de manière simple, un module électronique de pneumatique. Pour ce faire, le module électronique est inséré dans une poche qui est fixée, à l'intérieur du pneumatique par un moyen de fixation à deux composants.

La demande US2007/0175554 concerne un patch structuré afin de contenir un système électronique comprenant un capteur pour un pneumatique. La surface du patch est configurée afin d'être fixée sur le pneumatique.

Les documents suscités décrivent l'agencement de patchs destinés à loger des modules électroniques de pneumatiques. L'état de l'art fait référence à la manière dont sont associées des fonctions électroniques à des pneumatiques. Il en résulte que les fonctions électroniques pour pneumatiques sont gérées par un unique module électronique qui est soit définitivement implanté dans le pneumatique, soit apposé de façon amovible au pneumatique.

Le document DE1020080634469 décrit un insert pour pneumatique pourvu de deux compartiments. Ces deux compartiments sont rigidement fermés.

Le document EP1384603 décrit un pneumatique dans lequel une antenne est intégrée dans la zone basse d'un des flancs.

Les solutions révélées par l'état de la technique présentent certaines imperfections quels que soient leurs agencements. Il subsiste par conséquent un besoin pour une solution efficace permettant de gérer différentes fonctions inhérentes aux modules électroniques de pneumatique, en relation avec des données d'identification.

Pour pallier ces différents inconvénients, l'invention prévoit différents moyens techniques.

### EXPOSE DE L'INVENTION

Un premier objet de l'invention consiste à prévoir un moyen de fixation rapide et réversible d'un module électronique dans le pneumatique.

Un autre objet de l'invention vise à prévoir un dispositif facilitant la maîtrise de la distance entre un module électronique comportant un identifiant du pneumatique et un éventuel autre module électronique, afin de faciliter la communication entre ces deux modules.

Encore un objet de l'invention consiste à prévoir un dispositif permettant de combiner différents modules électroniques à fonctions complémentaires.

Un autre objet de l'invention vise à prévoir un système de fixation permettant à un système de surveillance de pneumatique d'opérer sans risque d'erreurs concernant l'identification du pneumatique.

Enfin un autre objet de l'invention consiste à prévoir un système de fixation permettant la mise en oeuvre d'un système de surveillance de pneumatique de façon à ce que l'historique de données de pression et / ou de température obtenu pour un pneumatique donné reste associé à ce pneumatique de manière rigoureuse, indépendamment de toute intervention ultérieure.

Pour ce faire, l'invention prévoit un patch pour module électronique de pneumatique comportant un compartiment sans ouverture logeant un module électronique de données d'identification. Le patch comporte de plus un second compartiment destiné à loger un module électronique à fonctions complémentaires adapté pour recevoir les données d'identification du module de données d'identification, dans lequel le second compartiment comporte une ouverture refermable.

Un tel agencement permet un appairage automatique entre les modules électroniques insérés dans des compartiments distincts et adjacents. Par exemple en cas de changement ou de retrait du module à fonctions complémentaires, lorsque le module initial ou un nouveau module est réinstallé, les données d'identifiant lui sont automatiquement transmises par le modules de données d'identification.

Un tel agencement de compartiment à ouverture permet d'insérer un module électronique dans le compartiment à ouverture, de manière réversible. De plus, une telle architecture permet de procéder à diverses interventions sur le module électronique à fonctions complémentaires, telles que le remplacement, la maintenance, la réparation, ou encore le recyclage du module. En effet le module électronique inséré dans le compartiment du patch pourvu d'une ouverture peut être mis en place rapidement, et réversiblement. Enfin, une telle architecture permet de garantir une bonne interaction entre les modules électroniques, ces derniers étant insérés dans un unique patch pour modules électroniques de pneumatique.

Selon un mode de réalisation avantageux, le module électronique de données d'identification du patch est conçu pour fournir des données d'identification du pneumatique correspondant.

Selon un autre mode de réalisation, le module électronique à fonctions complémentaires du patch est conçu pour mettre en oeuvre des fonctions complémentaires aux fonctions du module électronique de données d'identification.

Un tel agencement peut permettre de garantir un appairage fiable entre le module électronique de données d'identification et le module électronique à fonctions complémentaires. Egalement, et dans le cas où le module électronique de données d'identification comporte des données d'identification, une telle architecture permet d'associer sans risque d'erreur les mesures prises par le module électronique à fonctions complémentaires au bon pneumatique.

Selon une variante avantageuse, les fonctions du module électronique à fonctions complémentaires sont comprises parmi la liste de fonctions suivantes :
i) mesure de température,
ii) mesure de pression,
iii) mesure de cycles.

Selon une variante avantageuse, le patch comprend une pluralité de feuilles en tissu bi-élastique.

Egalement de manière avantageuse, les feuilles constituant le patch sont superposées de façon à former les compartiments.

Une telle juxtaposition de feuilles présente l'avantage de pouvoir constituer autant de compartiments qu'il y a de feuilles de séparation.

Encore de manière avantageuse, le patch comporte une feuille destinée à être en contact avec la paroi du pneumatique. Cette feuille sert de feuille de contact et est prévue de façon à adhérer à une surface constituée d'un mélange élastomère.

Selon un mode de réalisation avantageux, le patch comporte une feuille disposée entre les deux compartiments et forme ainsi une feuille de séparation.

Selon un autre mode de réalisation avantageux, le compartiment à ouverture du patch est formé d'un côté par la feuille de séparation et de l'autre côté par une ou plusieurs feuilles qui forment l'ouverture refermable.

Egalement de manière avantageuse, la feuille de séparation du patch est constituée d'un tissu bi-élastique traité pour ne pas adhérer avec la face adjacente de la feuille de contact et la ou les faces adjacentes de la ou des feuilles formant ladite ouverture refermable.

Encore de manière avantageuse, les feuilles formant l'ouverture refermable du patch sont traitées pour ne pas adhérer avec la face adjacente de la feuille de séparation.

L'invention prévoit également un pneumatique comportant un patch tel que préalablement décrit fixé contre une paroi interne du pneumatique.

### DESCRIPTION DES FIGURES

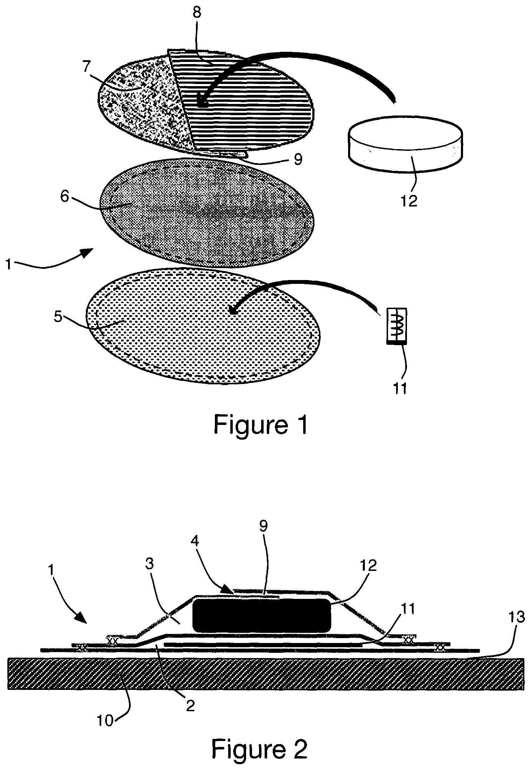

Tous les détails de réalisation sont donnés dans la description qui suit, complétée par les figures 1 et 2 présentées uniquement à des fins d'exemples non limitatifs, et dans lesquelles :
- la figure 1 est une vue éclatée des feuilles constitutives du patch pour modules électroniques de pneumatique ;
- la figure 2 est une vue en coupe de l'ensemble des éléments composant le patch selon l'invention.

### DESCRIPTION DETAILLEE DE L'INVENTION

La présente invention, telle que schématisée par les figures 1 et 2 consiste en un patch 1 pour module électronique de pneumatique.

La figure 1 est une vue éclatée de la configuration d'un patch 1 pour module électronique de pneumatique constitué de différentes feuilles 5, 6, 7 et 8. Ces feuilles sont disposées de façon à délimiter au moins deux compartiments distincts et pourvus de caractéristiques spécifiques.

### AGENCEMENT DES COMPARTIMENTS DU PATCH

Tout d'abord, les feuilles 5 et 6 sont fixées entre elles, en alignement l'une contre l'autre, afin de former un compartiment 2 sans ouverture. Ce compartiment 2 permet de loger un module électronique 11 de données d'identification. Ce module électronique 11 de données d'identification est inséré au moment de la fabrication du patch 1 et s'y trouve logé de manière définitive. Ce module électronique 11 de données d'identification est de manière préférentielle un module électronique d'identification.

Selon l'invention, le patch 1 prévoit un second compartiment 3. Ce dernier est prévu contre le compartiment sans ouverture, du côté opposé à la face de fixation au pneumatique 10. Pour former ce compartiment 3, la feuille externe 6 du compartiment 2 sans ouverture est utilisée pour former une première paroi. L'autre paroi du compartiment est formée par deux feuilles 7 et 8 rapportées contre la feuille 6. Tel que montré aux figures 1 et 2, ce compartiment 3 dispose d'une ouverture 4 refermable, permettant de loger un module 12 dans le compartiment 3, de façon amovible. Dans l'exemple illustré, le compartiment 3 à ouverture comporte une ouverture 4 constituée par un agencement spécifique des feuilles 7 et 8 : chaque feuille a un profil semi-circulaire, les deux demi-cercles étant agencés en opposition, avec une zone de superposition 9 sensiblement au milieu du cercle. L'ouverture 4 créée par cette superposition est bien visible à la figure 2.

Cette ouverture 4 peut également être complétée par des moyens de sécurisation tels qu'une fermeture à glissière, des bandes pourvues de crochets et boucles (« Velcro », marque déposée) ou autre moyen de fermeture.

Le patch 1 est mécaniquement solidaire du pneumatique 10. Les modules électroniques 11 et 12 sont respectivement insérés dans les compartiments du patch 1 de façon à être mobiles dans ces derniers. Le fait que les modules électroniques soient mobiles permet d'éviter qu'ils soient soumis aux contraintes mécaniques subies par le patch 1. En effet, en cas de contrainte subie par le pneumatique, du fait des déformations du pneumatique 10 et du patch 1, les modules sont entraînés vers une zone moins sollicitée mécaniquement. Ils sont ainsi mieux protégés et sont moins sujets à subir des détériorations grâce à cet agencement en compartiments.

### CONTENUS DES COMPARTIMENTS

Selon l'invention, un premier mode de réalisation consiste en un patch 1 pour modules électroniques de pneumatique comportant au moins deux compartiments 2 et 3, chacun des compartiments isolant des modules électroniques 11 et 12 à fonctions distinctes.

Selon ce premier mode de réalisation, le module électronique 11 de données d'identification installé dans le compartiment 2 sans ouverture est adapté pour mémoriser des données d'identifiant du pneumatique correspondant. Toujours selon ce premier mode de réalisation, le module électronique 12 à fonctions complémentaires inséré dans le compartiment 3 à ouverture est préférentiellement un module électronique fonctionnel, dont les fonctions complètent les fonctions du module électronique 11 de données d'identification. Ce module électronique 12 à fonctions complémentaires peut par exemple faire partie d'un système de surveillance de la pression des pneumatiques, et comporter un capteur de pression et éventuellement de température. Le module à fonctions complémentaires comprend avantageusement un sous-module d'échange de données, adapté pour transmettre les données acquises vers un module de réception et gestion des données, situé sur le véhicule ou sur un dispositif hors véhicule. Ce sous-module permet d'autre part de recevoir ou lire les données d'identification de pneumatique du module 11 de données d'identification. Les deux modules 11 et 12 étant toujours très près l'un de l'autre, les erreurs de communication sont ainsi évitées.

Dans le cas où le module électronique 11 de données d'identification contient un identifiant de pneumatique, le fait que le module soit définitivement fixé à un pneumatique donné permet de garantir que les données d'identification sont parfaitement fiables. Le module électronique 12 à fonctions complémentaires peut ainsi être retiré, voire échangé, sans risque. L'éventuel nouveau module reçoit les données d'identification du module 11 de données d'identification, qui lui, n'a pas changé.

Selon un autre mode de réalisation, les compartiments peuvent être plus nombreux, afin de permettre l'insertion d'une pluralité de modules électroniques dotés de fonctions différentes.

Sans sortir du cadre de l'invention, le patch 1 pour module électronique de pneumatique, et par conséquent les compartiments 2 et 3 et les modules électroniques 11 et 12 insérés, peuvent avoir des formes et agencements respectifs différents de ceux illustrés aux figures 1 et 2.

### CARACTERISTIQUES DES FEUILLES COMPOSANT LE PATCH

Les feuilles 5, 6, 7 et 8 constitutives du patch 1 pour module électronique de pneumatique sont rendues solidaires par collage, soudure, couture et tout autre moyen adapté.

La surface de la feuille 5 destinée à coopérer avec la paroi 13 du pneumatique est prévue avec un matériau compatible pour effectuer une fixation à cette paroi 13 par co-vulcanisation. L'utilisation d'une composition élastomère pour produire la feuille permet l'obtention d'une fixation définitive, fiable et durable. La surface opposée de la feuille 5 ainsi que les surfaces des autres feuilles sont non collantes. De plus, les feuilles 6, 7 et 8 sont également composées de matériau extensible. Ce type de matériau permet au patch de bien supporter les contraintes de déformation de la paroi de fixation et de pouvoir s'adapter à différents types de contenus.

Les Figures et leurs descriptions faites ci-dessus illustrent l'invention plutôt qu'elles ne la limitent.

Les signes de références dans les revendications n'ont aucun caractère limitatif. Les verbes "comprendre" et "comporter" n'excluent pas la présence d'autres éléments que ceux listés dans les revendications.

### Numéros de référence employés sur les figures

- 1: Patch
- 2: Compartiment sans ouverture
- 3: Compartiment à ouverture
- 4: Ouverture refermable
- 5: Feuille de contact
- 6: Feuille de séparation
- 7: Feuille formant l'ouverture refermable
- 8: Feuille formant l'ouverture refermable
- 10: Pneumatique
- 11: Module électronique de données d'identification
- 12: Module électronique à fonctions complémentaires
- 13: Paroi interne du pneumatique

## Revendications

1. Patch (1) pour module électronique de pneumatique comportant un compartiment (2) sans ouverture logeant un module électronique (11) de données d'identification, le patch comportant par ailleurs un second compartiment (3) destiné à loger un module électronique (12) à fonctions complémentaires adapté pour recevoir les données d'identification du module (11) de données d'identification, **caractérisé en ce que** le second compartiment (3) comporte une ouverture (4) refermable.

2. Patch selon la revendication 1, dans lequel le module électronique (11) de données d'identification est conçu pour fournir des données d'identification du pneumatique (10) correspondant.

3. Patch (1) selon l'une des revendications 1 à 2, dans lequel le module électronique (12) à fonctions complémentaires est conçu pour mettre en oeuvre des fonctions complémentaires aux fonctions du module électronique (11) de données d'identification.

4. Patch selon la revendication 3, dans lequel les fonctions complémentaires du module électronique (12) à fonctions complémentaires sont comprises parmi la liste de fonctions suivante :
- mesure de température ;
- mesure de pression ;
- mesure de cycles.

5. Patch selon l'une des revendications précédentes, comprenant une pluralité de feuilles (5, 6, 7, 8) en tissu bi-élastique.

6. Patch selon la revendication 5, dans lequel les feuilles (5, 6, 7, 8) sont superposées de façon à former les compartiments (2,3).

7. Patch selon l'une des revendications 5 ou 6, dans lequel la feuille destinée à être en contact avec la paroi (13) du pneumatique sert de feuille de contact (5), cette feuille étant prévue de façon à adhérer à une surface constituée d'un mélange élastomère.

8. Patch selon l'une des revendications 5 ou 6, dans lequel une des feuilles est disposée entre les deux compartiments (2, 3), et forme une feuille de séparation (6).

9. Patch selon la revendication 8, dans lequel le compartiment à ouverture (3) est formé d'un côté par la feuille de séparation (6) et de l'autre côté par une ou plusieurs feuilles (7, 8) formant l'ouverture (4) refermable.

10. Patch selon la revendication 9, dans lequel la feuille de séparation (6) est constituée d'un tissu bi-élastique traité pour ne pas adhérer avec la face adjacente de la feuille de contact (5) et la ou les faces adjacentes de la ou des feuilles (7, 8) formant ladite ouverture refermable.

11. Patch selon l'une des revendications 9 ou 10, dans lequel les feuilles (7, 8) formant l'ouverture refermable sont traitées pour ne pas adhérer avec la face adjacente de la feuille de séparation (6).

12. Pneumatique (10) comportant un patch (1) selon l'une des revendications 1 à 11, fixé contre une paroi interne (13) du pneumatique.

## Patentansprüche

1. Haltevorrichtung (1) für ein elektronisches Reifenmodul, welche eine Kammer (2) ohne Öffnung aufweist, die ein Elektronikmodul (11) für Identifikationsdaten aufnimmt, wobei die Haltevorrichtung außerdem eine zweite Kammer (3) aufweist, die dazu bestimmt ist, ein Elektronikmodul (12) mit ergänzenden Funktionen aufzunehmen, das dafür ausgelegt ist, die Identifikationsdaten des Moduls (11) für Identifikationsdaten zu empfangen, **dadurch gekennzeichnet, dass** die zweite Kammer (3) eine verschließbare Öffnung (4) aufweist.

2. Haltevorrichtung nach Anspruch 1, wobei das Elektronikmodul (11) für Identifikationsdaten dafür ausgelegt ist, Identifikationsdaten des entsprechenden Reifens (10) zu liefern.

3. Haltevorrichtung (1) nach einem der Ansprüche 1 bis 2, wobei das Elektronikmodul (12) mit ergänzenden Funktionen dafür ausgelegt ist, Funktionen auszuführen, welche die Funktionen des Elektronikmoduls (11) für Identifikationsdaten ergänzen.

4. Haltevorrichtung nach Anspruch 3, wobei die ergänzenden Funktionen des Elektronikmoduls (12) mit ergänzenden Funktionen in der folgenden Liste von Funktionen enthalten sind:
- Temperaturmessung;
- Druckmessung;
- Messung von Zyklen.

5. Haltevorrichtung nach einem der vorhergehenden Ansprüche, welche mehrere Folien (5, 6, 7, 8) aus bi-elastischem Gewebe umfasst.

6. Haltevorrichtung nach Anspruch 5, wobei die Folien (5, 6, 7, 8) so übereinandergelegt sind, dass die Kammern (2, 3) gebildet werden.

7. Haltevorrichtung nach einem der Ansprüche 5 oder 6, wobei die Folie, die dazu bestimmt ist, sich mit der Wand (13) des Reifens in Kontakt zu befinden, als Kontaktfolie (5) dient, wobei diese Folie so vorgesehen ist, dass sie an einer Fläche haftet, die aus einer Elastomermischung besteht.

8. Haltevorrichtung nach einem der Ansprüche 5 oder 6, wobei eine der Folien zwischen den beiden Kammern (2, 3) angeordnet ist und eine Trennfolie (6) bildet.

9. Haltevorrichtung nach Anspruch 8, wobei die Kammer mit Öffnung (3) auf einer Seite von der Trennfolie (6) und auf der anderen Seite von einer oder mehreren Folien (7, 8), welche die verschließbare Öffnung (4) bilden, gebildet wird.

10. Haltevorrichtung nach Anspruch 9, wobei die Trennfolie (6) aus einem bi-elastischen Gewebe besteht, das so behandelt ist, dass es nicht an der benachbarten Seite der Kontaktfolie (5) und der oder den benachbarten Seiten der Folie oder der Folien (7, 8), welche die verschließbare Öffnung bilden, haftet.

11. Haltevorrichtung nach Anspruch 9 oder 10, wobei die Folien (7, 8), welche die verschließbare Öffnung bilden, so behandelt sind, dass sie nicht an der benachbarten Seite der Trennfolie (6) haften.

12. Reifen (10), welcher eine Haltevorrichtung (1) nach einem der Ansprüche 1 bis 11 aufweist, die an einer Innenwand (13) des Reifens befestigt ist.

## Claims

1. Patch (1) for an electronic module of a tyre, comprising a compartment (2) without an opening, housing an electronic identification data module (11), the patch further comprising a second compartment (3) designed to house an electronic module (12) with complementary functions, adapted to receive the identification data from the identification data module (11), wherein the second compartment (3) comprises a reclosable opening (4).

2. Patch according to Claim 1, wherein the electronic identification data module (11) is designed to supply identification data of the corresponding tyre (10).

3. Patch (1) according to either of Claims 1 and 2, wherein the electronic module (12) with complementary functions is designed to provide functions complementary to the functions of the electronic identification data module (11).

4. Patch according to Claim 3, wherein the complementary functions of the electronic module (12) with complementary functions are included in the following list of functions:
- temperature measurement;
- pressure measurement;
- cycle measurement.

5. Patch according to any of the preceding claims, comprising a plurality of sheets (5, 6, 7, 8) of two-way stretch fabric.

6. Patch according to Claim 5, wherein the sheets (5, 6, 7, 8) are overlapped to form the compartments (2, 3).

7. Patch according to either of Claims 5 and 6, wherein the sheet designed to be in contact with the wall (13) of the tyre acts as a contact sheet (5), this sheet being provided so as to adhere to a surface formed by an elastomeric mixture.

8. Patch as claimed in either of claims 5 and 6, wherein one of the sheets is placed between the two compartments (2, 3), and forms a separating sheet (6).

9. Patch according to Claim 8, wherein the compartment with an opening (3) is formed on one side by the separating sheet (6) and on the other side by one or more sheets (7, 8) which form the reclosable opening (4).

10. Patch according to Claim 9, wherein the separating sheet (6) consists of a two-way stretch fabric treated so as not to adhere to the adjacent face of the contact sheet (5) and the adjacent face or faces of the sheet or sheets (7, 8) forming said reclosable opening.

11. Patch according to either of Claims 9 and 10, wherein the sheets (7, 8) forming the reclosable opening are treated so as not to adhere to the adjacent face of the separating sheet (6).

12. Tyre (10) comprising a patch (1) according to any of Claims 1 to 11, fastened against an inner wall (13) of the tyre.
